Europäisches Patentamt

(19) European Patent Office

Office européen des brevets

(11) Publication number: 0 135 481
A2

# (12) EUROPEAN PATENT APPLICATION

(21) Application number: 84830156.0

(22) Date of filing: 21.05.84

(51) Int. Cl.⁴: B 62 D 51/00
B 62 B 5/02, B 62 B 5/04

(30) Priority: 28.06.83 IT 8341083
27.03.84 IT 6035284 U

(43) Date of publication of application:
27.03.85 Bulletin 85/13

(84) Designated Contracting States:
AT BE CH DE FR GB LI LU NL SE

(71) Applicant: Fabbro, Alberto
n. 36 Via Udine
I-33010 Cassacco (Udine)(IT)

(72) Inventor: Fabbro, Alberto
n. 36 Via Udine
I-33010 Cassacco (Udine)(IT)

(74) Representative: D'Agostini, Giovanni, Dr.
n. 17 via G.Giusti
I-33100 Udine(IT)

(54) Two-wheeled/tracked trolley having a regenerative braking device.

(57) A wheel-barrow shaped two wheeled loading handtruck equipped or equippable with tracks or other similar brakeable belted rolling devices characterised in that said tracks or other similar belted rolling devices are connected to an energy accumulator which charges when going downward on a sloping surface or down the stairs for returning accumulated energy converting said energy again in advancing force.

FIG. 7

0135481

Wheel-barrow shaped two wheeled loading handtruck, equipped or equippable with brakeable tracks and energy accumulation device

The present invention relates to a wheel-barrow shaped two wheeled loading handtruck, equipped or equippable with brakeable tracks and energy accumulation device.

The invention is particularly suitable for use in trasporting loads along stairs downward or upward with possibility of adjustable braking and accumulation and return of the energy otherwise wasted by braking in downward direction, in order to reutilize said accumulated energy for going up again.

In the present state of the art, self-propelled trucks are known provided with tracks operated by conventional motorsuch as battery electric motor and therefore intended for moving on uneven ground, upward and downward, and also upstairs and downstairs. These types of trucks are provided with steering gear and equipped with driving means placed on the same steering gear; they are further provided with a transport frame for transporting loads of any kinds.

Conventional wheel-barrow shaped two wheeled handtrucks are also well known and have been used for many years for transporting various loads.

There is no knowledge of trucks which can combine independently these two functions and further permit utilization of energy otherwise wasted for braking the truck when going downward loaded in order to reutilize said energy when going up again empty or with reduced loads.

The invention as claimed is intended to remedy these drawbacks. It solves the problem providing an energy accumulation and return device capable of accumulating energy from the loaded handtruck going downward and return said energy when going up again with reduced load. In a preferred embodiment of the invention said energy accumulation and return device consists in an energy accumulation and return equipment which can be mounted on a conventional wheel-barrow shaped two wheeled handtruck and can also be removable from said handtruck for allowing use of handtruck also in an independent manner.

The advantages offered by this invention are mainly that a load such as a wine demijohn can be easily carried downward even down the stairs and accumulated energy can be reutilized for letting the handtruck go upward again empty or with the empty demijohn on it.

One way of carrying out the invention is described in detail below with reference to drawings which illustrate two preferred embodiments, in which:

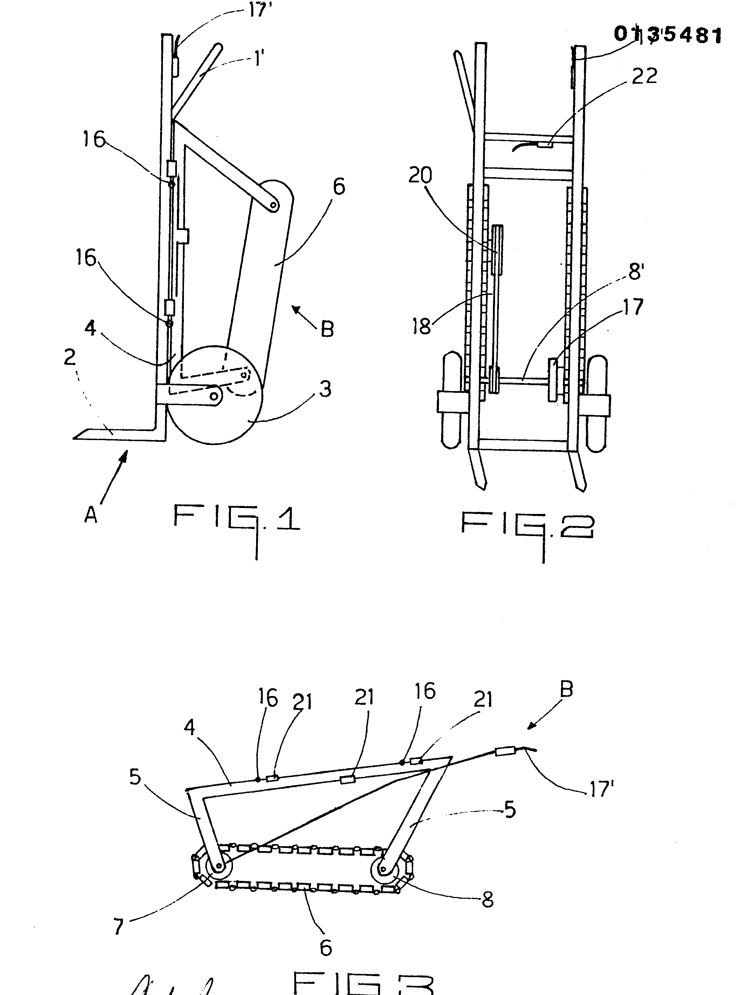

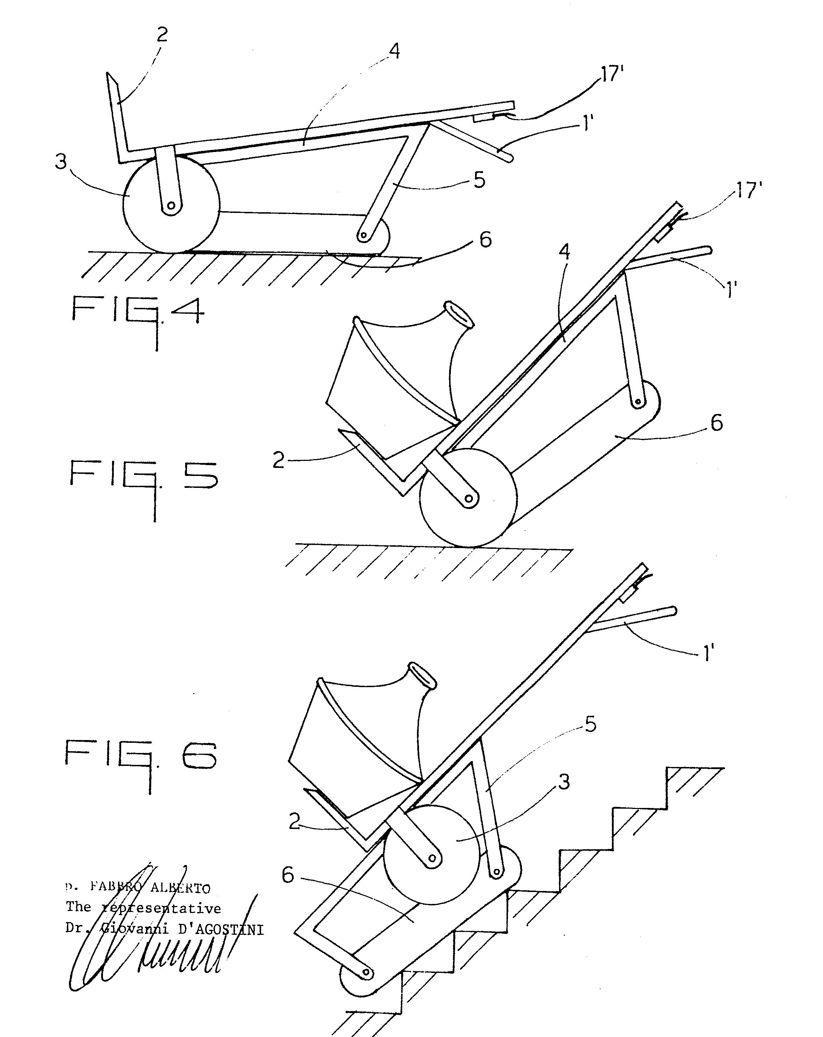

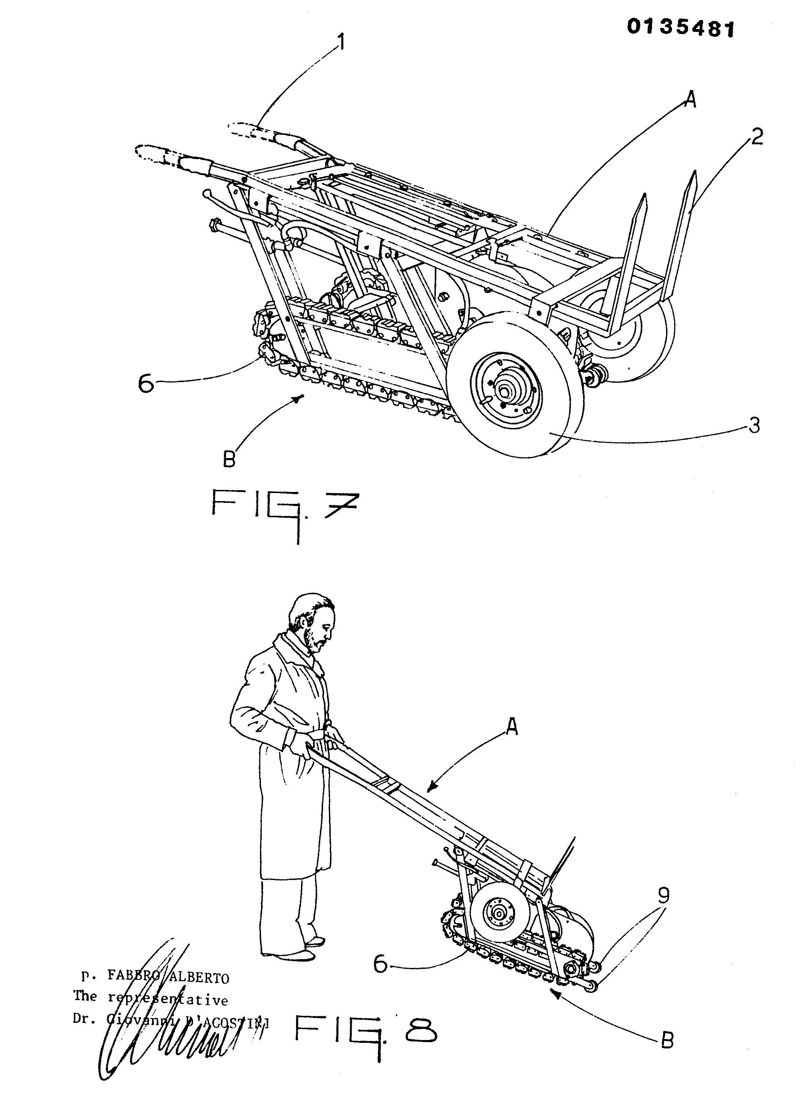

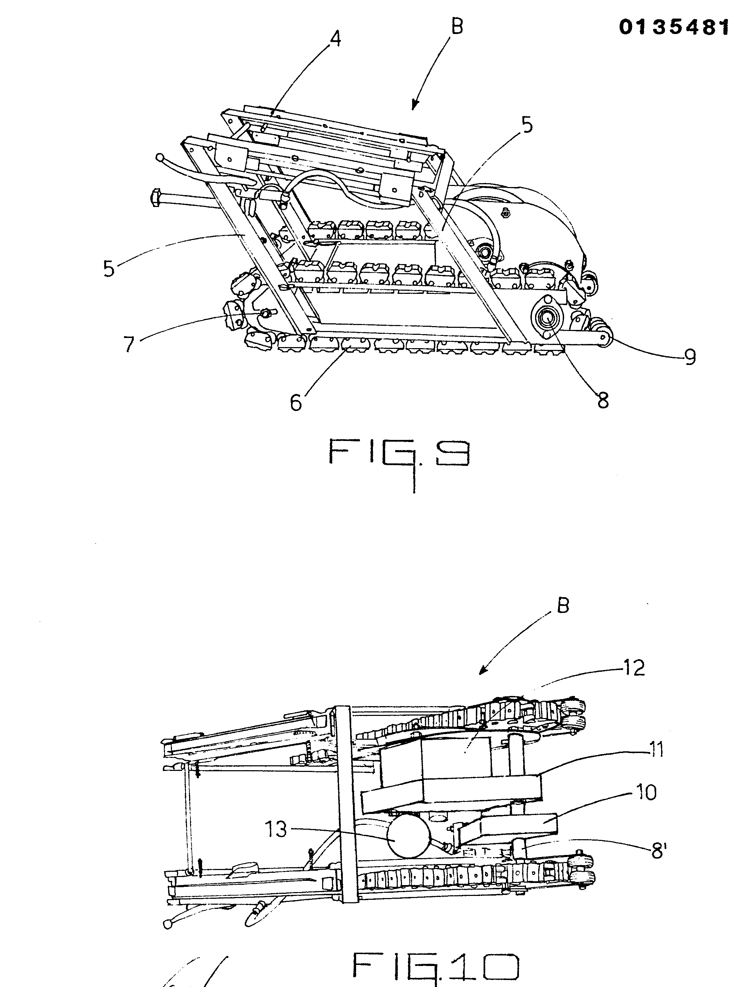

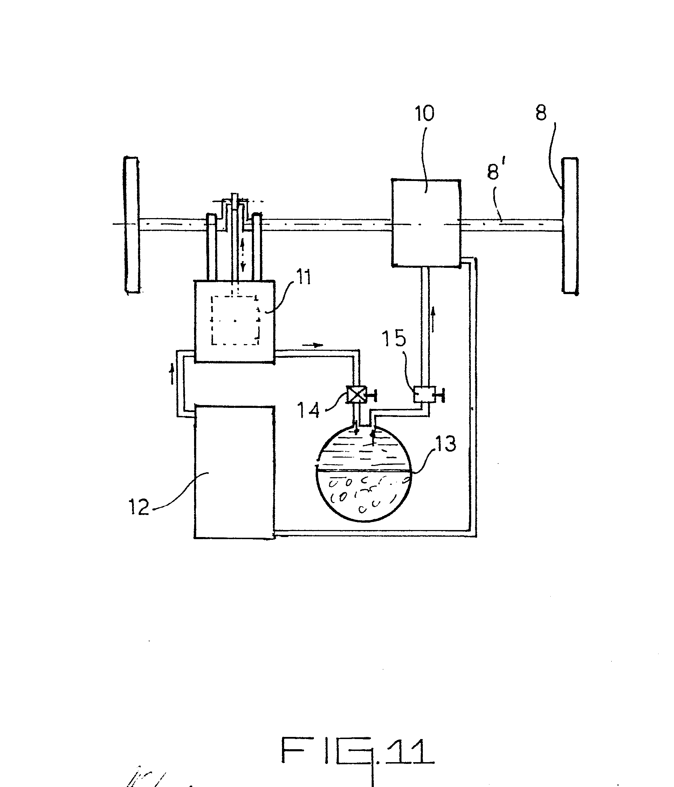

Figure 1 is a side view of the handtruck provided with spring-loaded accumulator with energy accumulation and return tracks equipment; Figure 2 is a front view of said handtruck; Figure 3 shows the tracks equipment; Figure 4 shows the tracks handtruck at rest; Figure 5 shows the handtruck advancing on wheels without using tracks; Figure 6 shows the handtruck with tracks leaning on the edges of the steps, being said tracks moved forward for avoiding overturning of load when going downward; Figure 7 is a perspective view of the equipment modified as hydraulic accumulator mounted on the handtruck in retracted position for transport on level ground; Figure 8 shows the handtruck of Figure 7 but with the energy accumulation and return equipment advanced under the wheels for replacing same and effecting the accumulation and return function, being however the illustrated arrangement of the handtruck in free level movement state without retraction and without energy accumulation; Figure 9 is a side elevation perspective view of the accumulation and return equipment removed from the handtruck; Figure 10 is a plan perspective view of the accumulation and return equipment of Figure 9; Figure 11 is a block diagram of the hydraulic system relating to the accumulation and return device mounted in said removable energy accumulation and return equipment as per Figures 7 to 10.

According to the above figures the invention comprises an energy accumulation and return removable equipment (B) mountable on a wheel-barrow shaped handtruck with a pair of front idle wheels (A).

In Figures 1 to 6 an embodiment provided with spring-loaded accumulator is shown; while in Figures 7 to 11 a modified embodiment provided with hydraulic accumulator is shown.

According to the figures the handtruck (A) has a conventional shape with two parallel longitudinal members (1) which form the frame and with backward extensions, the handles, the supporting arms of which identify with the ends of said longitudinal members, are shortenable or extensible, e.g. in telescopic manner as shown in broken lines in Figure 7, or inclinable or branched as shown with 1'in Figure 1. Forks in orthogonal direction (2) are forward positioned. The possibility of varying the length of the handles or changing their position is particularly useful when transport conditions are difficult and space is narrow. Obviously, arms can also be folding as shown in Figures 1 to 6.

Under the frame, and precisely outside the longitudinal members (1), idle translation wheels (3) are located by means of U bolt supports which depart welded from said longitudinal members (1) thus realizing a bridge-shaped structure for receiving said accumulation and return equipment (B) between the wheels and under said longitudinal members (1) frame.

The accumulation and return equipment (B) comprises a conventional upper coupling device such as screw clamps, or bayonet joints or lever clamps (21), etc., which is mounted on telescopic guide (4) for being longitudinally moved from a retracted position as shown in Fig. 1 to an advanced position as shown in Fig. 2, in order to move the handtruck respectively on the wheels of the handtruck (3) or the accumulation and return equipment especially prearranged for movements on plane surface in emergency condition (as for example for going down the stairs) by means of the respective front small wheels (9). The equipment can operate as an energy accumulator, as for example downward on a sloping surface and thanks to the tracks also down the stairs, for then returning energy when going up again. For this purpose, according to the hydraulic solution (Figs. 7-11) the tracks (6) are stretched between pairs of wheels (7,8) and the keyed axle of the front wheels (8') is provided with a cam for actuating a hydraulic pump (11) fed by a tank (12), said pump (11) by means of nonreturn valve and adjustment device (14), feeds a compressed gas accumulation chamber (13) which in its turn is connected by means of regulator (15) to a hydraulic motor (10) which operates the driving shaft (8') of the tracks (6) of the equipment (B).

It follows that by operating the suitable controls, said tracks will transmit in accumulation movement to the pump (11) which will deliver hydraulic fluid into the compressed gas accumulation chamber (13). When energy return is desired, it will be sufficient, by means of the suitable controls, to deliver hydraulic fluid from the accumulation chamber (13) to the motor (10).

According to the mechanic solution (Figs. 1-3) the shaft (8') operates a friction pulley which operates by belt (18) a rotation accumulation spiral spring pulley (20). A brake (17) controlled by the lever (17') is also preferably mounted on the driving shaft (8'). A locking lever is indicated with (22) in the advanced position of the track structure (B) locked with hooks (21) by means of a pin on the frame (1) which fits in the prearranged positions (not shown but well-known to those skilled in the art) while (16) indicates bearings or small wheels which favour longitudinal sliding in the two directions.

Of course the accumulation chamber (13) can be connected with an additional hand pump (not shown) in order to supply additional energy in determinate critical conditions in which energy accumulated going downward were not sufficient for going up again.

Of course changes and modifications can be made without departing

0135481

from the spirit and scope of the invention as defined in the appended claims.

Udine, May 23, 1985.

p. Alberto FABBRO

The Representative

Dr. Giovanni D'Agostini

Claims:

1. Wheel-barrow shaped two wheeled loading handtruck equipped or equippable with brakeable tracks or other similar belted rolling devices, characterised in that said tracks or other similar belted rolling devices are connected to an energy accumulator which charges when going downward on a sloping surface or down the stairs, and is provided with control means for returning accumulated energy converting same again in advancing force.

2. A handtruck as claimed in claim 1, characterised in that the equipment comprising said rolling device for accumulating and returning energy is mounted on an independent structure constituting an equipment (B) mountable or removable under the frame (1) of said handtruck (A).

3. A handtruck as claimed in the preceding claims, characterised in that the respective wheels of the handtruck (3) are mounted on U bolt supports for receiving thereinto said energy accumulation and return equipment (B).

4. A handtruck as claimed in the preceding claims, characterised in that said energy accumulation and return equipment (B) is longitudinally movable under said handtruck (A) from a retracted position not interfering with said handtruck wheels (3), to an advanced position under said handtruck wheels (3) for removing to said wheels the support on the ground and thus replace them and move barycenter backward.

5. A handtruck as claimed in the preceding claims, characterised in that said energy accumulation and return equipment (B) comprises in front a pair of idle small wheels (9) which work replacing said handtruck wheels (3).

6. A handtruck as claimed in the preceding claims, characterised in that the control and movement handles are mounted on shortenable or articulated arms in order to vary the space between said handles and the transport wheels (3,9) and/or tracks (6).

7. A handtruck as claimed in the preceding claims, characterised in that it comprises therein and/or in said energy accumulation and return equipment, a braking device.

8. A handtruck as claimed in the preceding claims, wherein said energy accumulation and return equipment is of the type at elastic deformation of a body or material (13).

9. A handtruck as claimed in the preceding claims, characterised in that the track or belted rolling devices (6) of said energy accumulation and return equipment (B) are stretched between pair of wheels (7,8) and the keyed axle of the front wheels (8') controls a hydraulic pump (11) fed by a tank (12), said pump (11), by means of nonreturn valve and adjustment device (14), feeds a compressed gas accumulation chamber (13) which in its turn is connected by means of regulator (15) to a hydraulic motor (10) which operates the driving shaft (8') of the tracks/belted rolling devices (6) of the equipment (B).

10. A handtruck as claimed in the preceding claims, characterised in that an additional hydraulic hand pump is also connected to

- 3 -                          0135481

said compressed gas energy accumulation chamber (13).

Udine, May 23, 1984.

p./Alberto FABBRO

The Representative

Dr. Giovanni D'Agostini

0135481

FIG.1

FIG.2

FIG.3

0135481

FIG. 4

FIG. 5

FIG. 6

D. FABBRO ALBERTO
The representative
Dr. Giovanni D'AGOSTINI

0135481

FIG. 7

p. FABBRO ALBERTO
The representative
Dr. Giovanni D'AGOSTINI

FIG. 8

0135481

FIG. 9

FIG.10

P. FABBRO ALBERTO
The representative
Dr. Giovanni D'AGOSTINI

FIG.11

p. FABBRO ALBERTO
The representative
Dr. Giovanni D'AGOSTINI